(19) Europäisches Patentamt
European Patent Office
Office européen des brevets

(11) **EP 2 517 099 B1**

## (12) EUROPEAN PATENT SPECIFICATION

(45) Date of publication and mention
of the grant of the patent:
**19.07.2017 Bulletin 2017/29**

(21) Application number: **09839488.5**

(22) Date of filing: **25.12.2009**

(51) Int Cl.:
*G06F 7/487* (2006.01)     *G06F 9/38* (2006.01)

(86) International application number:
**PCT/RU2009/000727**

(87) International publication number:
**WO 2011/078725 (30.06.2011 Gazette 2011/26)**

(54) **FAST BRANCH-FREE VECTOR DIVISION COMPUTATION**

SCHNELLE VERZWEIGUNGSFREIE VEKTORTEILUNGSBERECHNUNG

CALCUL DE DIVISION DE VECTEUR RAPIDE SANS BRANCHE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**31.10.2012 Bulletin 2012/44**

(73) Proprietor: **Intel Corporation**
**Santa Clara, CA 95054 (US)**

(72) Inventors:
• **KOLESOV, Andrey Ivanovich**
**Nizhniy Novgorod 603126 (RU)**
• **KURIAKIN, Valery Fedorovich**
**Nizhny Novgorod 603106 (RU)**
• **GUSEVA, Maria Valerievna**
**Nizhegorodskaya obl. 607650 (RU)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
• **"IEEE Standard for Floating-Point Arithmetic;IEEE Std 754-2008 ED - Anonymous" IEEE STANDARD; [IEEE STANDARD], IEEE, PISCATAWAY, NJ, USA, 29 August 2008 (2008-08-29), pages 1-58, XP017604142 ISBN: 978-0-7381-5752-8 cited in the application**
• **PFISTER M: "A fast division algorithm for SIMD-neurocomputers" NEURAL NETWORKS, 1994. IEEE WORLD CONGRESS ON COMPUTATIONAL INTELLIGEN CE., 1994 IEEE INTERNATIONAL CONFERENCE ON ORLANDO, FL, USA 27 JUNE-2 JULY 1994, NEW YORK, NY, USA,IEEE LNKD- DOI:10.1109/ICNN.1994.374562, vol. 4, 27 June 1994 (1994-06-27), pages 2223-2226, XP010127651 ISBN: 978-0-7803-1901-1**
• **KARLO GUSSO LENZI ET AL: "Optimized Math Functions for a Fixed-Point DSP Architecture", COMPUTER ARCHITECTURE AND HIGH PERFORMANCE COMPUTING, 2007. SBAC-PAD 2007. 19TH INTERNATIONAL SYMPOSIUM ON, IEEE, PISCATAWAY, NJ, USA, 1 October 2007 (2007-10-01), pages 125-132, XP031161518, ISBN: 978-0-7695-3014-7**
• **"ADSP-BF533 Blackfin (R) Processor Hardware Reference - Revision 3.4", , 30 April 2009 (2009-04-30), pages 809-818, XP055100806, Retrieved from the Internet: URL:http://www.analog.com/static/imported-files/processor_manuals/bf533_hwr_Rev3.4.p df [retrieved on 2014-02-07]**

**Description**

FIELD

The present disclosure generally relates to the field of computing. More particularly, an embodiment of the invention generally relates to techniques for fast branch-free vector division computation.

BACKGROUND

Compared to other simple arithmetic operations, hardware implementations for division operations have been quite slow, for example, due to larger latency. Some speedup could be achieved in vector cases due to various kind of parallelism existence on modern architectures, such as via SIMD (Single-Instruction, Multiple-Data) parallelism, superscalar, and out-of-order execution. For example, reciprocal approximation with further Newton-Raphson refinement iterations method (such as discussed at http://en.wikipedia.org/wiki/Newton%E2%80%93Raphson method) generally works well for single precision (SP) case providing up to a two-fold speedup over hardware division operation in some implementations. However, this approach loses most of its benefits on double precision (DP) side because of absence of double precision reciprocal operation in current SSE architectures. Consequently, additional DP to SP and SP to DP conversions may need to be performed, along with exponent field manipulations. Further, the SP and DP above-described approximations generally require special processing of denominator with infinite (INF) or zero values, reducing parallelism and reducing potential performance gains.

In "A fast division algorithm for SIMD-neurocomputers" by M. Pfister, Neural Networks. IEEE World Congress on Computational Intelligence, 1994, pages 2223-2226, a division algorithm is described, which is suitable for dividing integer values using approximations and look-up tables. The IEEE standard representation for floating-point values is described in "IEEE Standard for Floating Point Arithmetic; IEEE Std 754-2008 ED-Anonymous", 29 August 2008.

In "Optimized Math Functions for a Fixed-Point DSP Architecture" by K. G. Lenzi et al., 19th International Symposium on Computer Architecture and High Performance Computing, 2007, pages 125-132, a method for implementing high-performance math functions through polynomial approximation on a dedicated fixed-point architecture is described. The approach is based on an emulation of floating-point operations and fixed-point architectures via software. The utilized hardware infrastructure is further described in "ADSP-BF533 Blackfin (R) Processor Hardware Reference - Revision 3.4", 2009 (2009-04-30), pages 809-818.

The above problems are solved by an apparatus, a computer-readable medium comprising one or more instructions, and a method for execution in a processor as defined in the independent claims. Preferred embodiments are defined in the corresponding dependent claims.

BRIEF DESCRIPTION OF THE DRAWINGS

The detailed description is provided with reference to the accompanying figures. In the figures, the left-most digit(s) of a reference number identifies the figure in which the reference number first appears. The use of the same reference numbers in different figures indicates similar or identical items.

Fig. 1 illustrates a flow diagram of a method according to an embodiment of the invention.

Figs. 2A-2C illustrate pseudo code segments, which may be used in some embodiments.

Fig. 3 illustrates a block diagram of a fast vector division, according to an embodiment.

Figs. 4 and 5 illustrate block diagrams of embodiments of computing systems, which may be utilized to implement some embodiments discussed herein.

DETAILED DESCRIPTION

In the following description, numerous specific details are set forth in order to provide a thorough understanding of various embodiments. However, various embodiments of the invention may be practiced without the specific details. In other instances, well-known methods, procedures, components, and circuits have not been described in detail so as not to obscure the particular embodiments of the invention. Further, various aspects of embodiments of the invention may be performed using various means, such as integrated semiconductor circuits ("hardware"), computer-readable instructions organized into one or more programs ("software"), or some combination of hardware and software. For the purposes of this disclosure reference to "logic" shall mean either hardware, software (including for example micro-code that controls the operations of a processor), or some combination thereof.

Reference in the specification to "one embodiment" or "an embodiment" means that a particular feature, structure, or characteristic described in connection with the embodiment may be included in at least an implementation. The appearances of the phrase "in one embodiment" in various places in the specification may or may not be all referring to the same embodiment.

Also, in the description and claims, the terms "coupled" and "connected," along with their derivatives, may be used. In some embodiments of the invention, "connected" may be used to indicate that two or more elements are in direct physical or electrical contact with each other. "Coupled" may mean that two or more elements are in direct physical or electrical contact. However, "coupled" may also mean that two or more elements may not be in direct contact with each other, but may still cooperate or interact with each other.

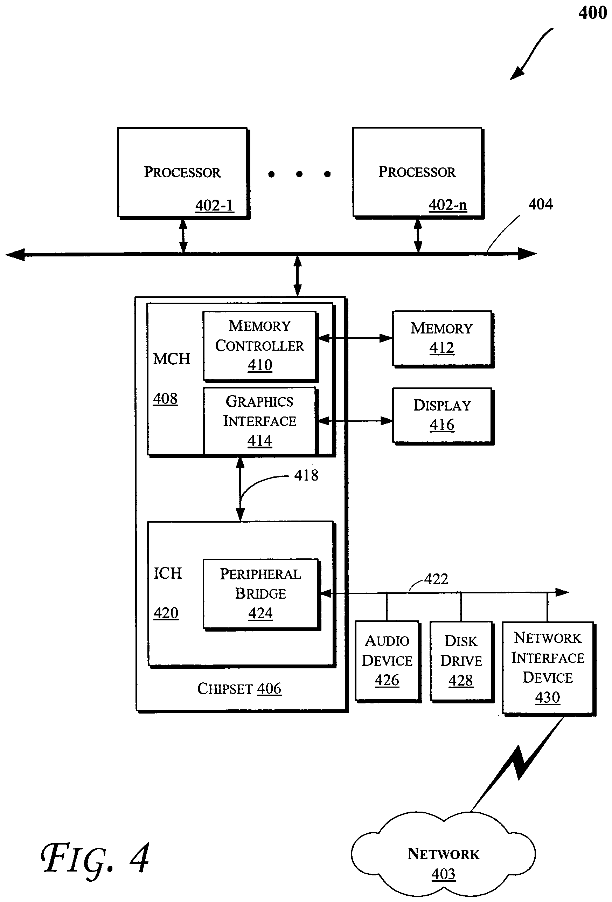

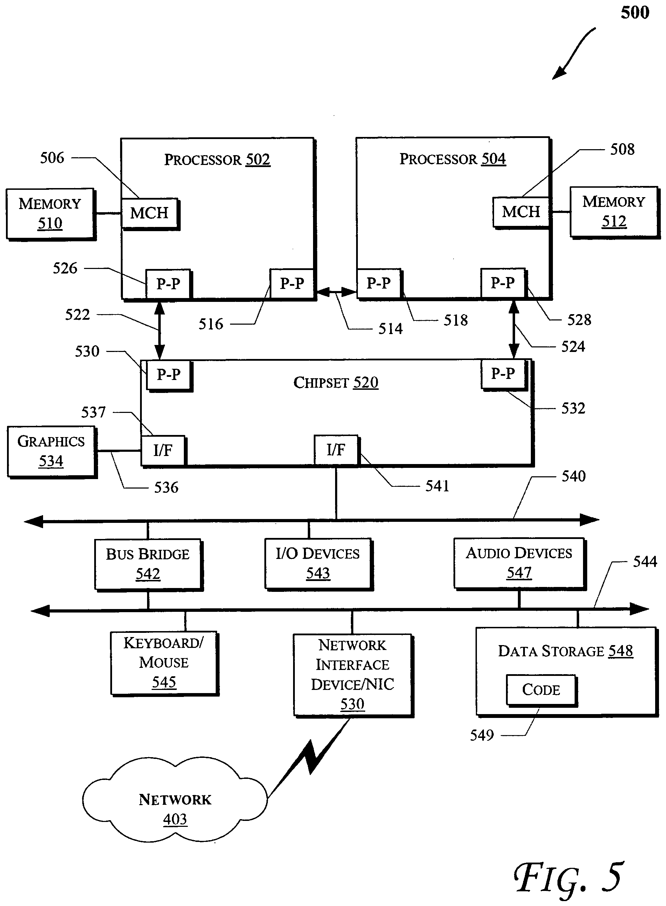

Some of the embodiments discussed herein may provide improved performance for double precision division/inversion vector computations, e.g., without requiring branches or special actions which were previously necessary. The vector division computations may be performed on SIMD computing platforms. Generally, SIMD is a technique employed to achieve data level parallelism. In particular, multiple data may be processed in multiple corresponding lanes of an SIMD vector processor (such as processors 402 and 502/504 of Figs. 4 and 5, respectively) in accordance with a single instruction.

In some implementations, only one division operation is performed for several inversions. Taking the following as an example (proposed by I. I. Zavarzin, V. F. Kuryakin, V. V. Lunev, D.M. Obuvalin, V. G. Ryzhih in "Optimizatsiya Vychislenij Vektornyh Funktsyj." VANT. ser. Matematicheskoe modelirovanie fizicheskih protsessov. 1997. Vol. 4 (Russian language magazine)):

$$\frac{1}{x_1} = x_2 \cdot x_3 \cdot x_4 \cdot R,$$

$$\frac{1}{x_2} = x_1 \cdot x_3 \cdot x_4 \cdot R,$$

$$\frac{1}{x_3} = x_1 \cdot x_2 \cdot x_4 \cdot R,$$

$$\frac{1}{x_4} = x_1 \cdot x_2 \cdot x_3 \cdot R,$$

where $R = \dfrac{1}{x_1 \cdot x_2 \cdot x_3 \cdot x_4}$

The inversion of every argument may be computed using three additional multiplications by $R$ and three other arguments which is generally faster than four hardware divisions that involve large latency and large throughput value. More specifically, for the general case of N values, the next maximum possible performance gain estimation for this technique (D, M -throughput values for Division and Multiplier, respectively) may be:

$$gain = \frac{D}{\dfrac{D}{N} + \dfrac{(N-1) \cdot M}{N} + (N-1) \cdot M}$$

A weakness of this approach lies in high possibility to encounter overflow or underflow for the product $x_1 \cdot x_2 \cdot x_3 \cdot x_4$ because of argument exponents variety which may result in incorrect outputs for the whole four-arguments bundle. For example, if $x_1 = 0.0$, but $x_2 \neq 0.0$, $x_3 \neq 0.0$, $x_4 \neq 0.0$, then $R = INF$ and three of four results are incorrect:

$$\frac{1}{x_2} = \frac{1}{x_3} = \frac{1}{x_4} = INF$$

To address this problem, there needs to be a guarantee that the sum of all input exponents is not going to cause underflow or overflow. This makes the work interval quite narrow and requires argument comparisons with possible branches for special cases that cannot be processed properly in the main path. In an embodiment, the above-mentioned problems may be addressed by argument scaling and reconstruction.

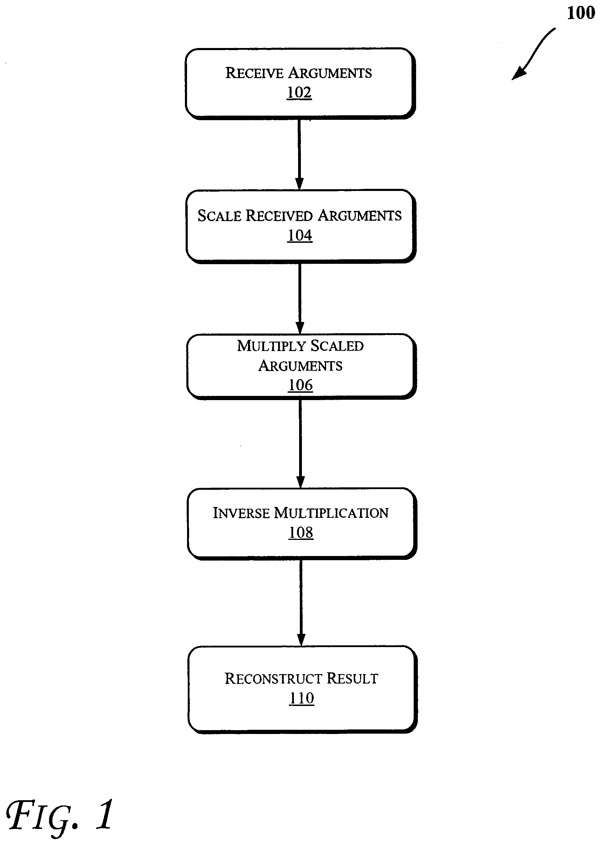

More specifically, **Fig. 1** illustrates a flow diagram of a method 100 in accordance with one embodiment. At an operation 102, one or more arguments (e.g., $x_1$, $x_2$, etc.) are received. The arguments may be represented as $x = (-1)^s b^n \cdot f$, where the terms are defined as follows:

$s = \{0,1\}$ - sign for "s" in $(-1)^s$,
$b$ - base (e.g., for binary case $b = 2$),
$n$ - exponent ($E_{max} \leq n \leq E_{min}$), where $E_{max}$ and $E_{min}$ respectively refer to the minimum and maximum exponents for corresponding data type according to ANSI/IEEE Std 754-2008.

$$f = 2^0 + f_1 \cdot 2^{-1} + f_2 \cdot 2^{-2} + ... + f_p \cdot 2^{-p} = 1.f_1 f_2 ... f_p B \qquad - \qquad \text{mantissa}$$

$$(1 \leq f < 2).$$

The inversion can be determined: $\dfrac{1}{x} = \dfrac{1}{(-1)^s 2^n \cdot f} = (-1)^s \cdot 2^{-n} \cdot \dfrac{1}{f} \cdot$

Assume that $(x_1, x_2, x_3, x_4)$ are input arguments where $x_i = (-1)^{si} 2^{ni} \cdot f_i$ for $i = \overline{1,4}$. These are scaled at operation 104 by $2^0_i$ as $z_i = 1.0 \cdot f_i = 2^0 \cdot f_i$. The scaled arguments are multiplied at operation 106 (e.g., $M = z_1 z_2 z_3 z_4$) and the multiplication is inversed at operation 108 (e.g., R= 1/M). For example, every $\dfrac{1}{z_i}$ for i = $\overline{1,4}$ is calculated by:

$$\frac{1}{z_i} = \frac{\prod\limits_{j \neq i} z_j}{z_1 z_2 z_3 z_4}$$

At an operation 110, the result is reconstructed as $\dfrac{1}{x_i} = (-1)^{s_i} \cdot 2^{m_i} \cdot \dfrac{1}{z_i}$ where

$m_i = \sum\limits_{j \neq i} n_j - \sum\limits_{j=1,4} n_j = -n_i$ , in an embodiment, by an "insertion" of negated input exponent $2^{-n_i}$ and source sign into $\dfrac{1}{z_i}$.

This approach provides sufficient accuracy and processes Institute of Electrical and Electronics Engineers, Inc. (IEEE) special values within the main path. As much as $z_i \in [1,2)$, no results with over/under-flow may occur during computation, e.g., a product of any two values $z_i \cdot z_j \in [1,4)$, of any three values $z_i \cdot z_j \cdot z_k \in [1,8)$, of all four arguments $z_1 \cdot z_2 \cdot z_3 z_4 \in [1,16)$ and $\dfrac{1}{z_i} \in (0.5,1]$, etc.

Furthermore, every multiplication may be done by rounding to working precision with error as much as 0.5 ulp (Unit in the Last Place or Unit of Least Precision; see, e.g., http://en.wikipedia.org/wiki/Ulp; see, also, e.g., "On the definition of ulp(x)" by Jean-Michel Muller, INRIA Technical Report 5504), so the error of calculating $z_1 \cdot z_2 \cdot z_3 \cdot z_4$ will not be higher than $3 \cdot 0.5 = 1.5$ ulp.

In an embodiment, to find $\dfrac{1}{z_i} = \dfrac{\prod\limits_{j \neq i} z_j}{z_1 z_2 z_3 z_4}$ another three multiplications may be used with additional $3 \cdot 0.5$

= 1.5 ulp and one inversion which is error-free this case. Thus, error of the result $\dfrac{1}{z_i}$ will be less or equal to (3 + 3) *

$0.5 = 3.0$ ulp. Final reconstruction $\frac{1}{x_i} = (-1)^{s_i} \cdot 2^{m_i} \cdot \frac{1}{z_i}$ does not add any additional errors due to IEEE floating point numbers representation. Resulting 3.0 ulp is within requirements for ICL (Intel Compiler), SVML (Short Vector Math Library), MKL (Math Kernel Library) and IPP (Intel Performance Primitives) vector math libraries LA (Low Accuracy) default flavor - up to four ulp that corresponds to two incorrect mantissa bits which is enough for large majority of applications.

Furthermore, even though a case with a four-value bundle is discussed herein, these techniques could be applied to any bundle size.

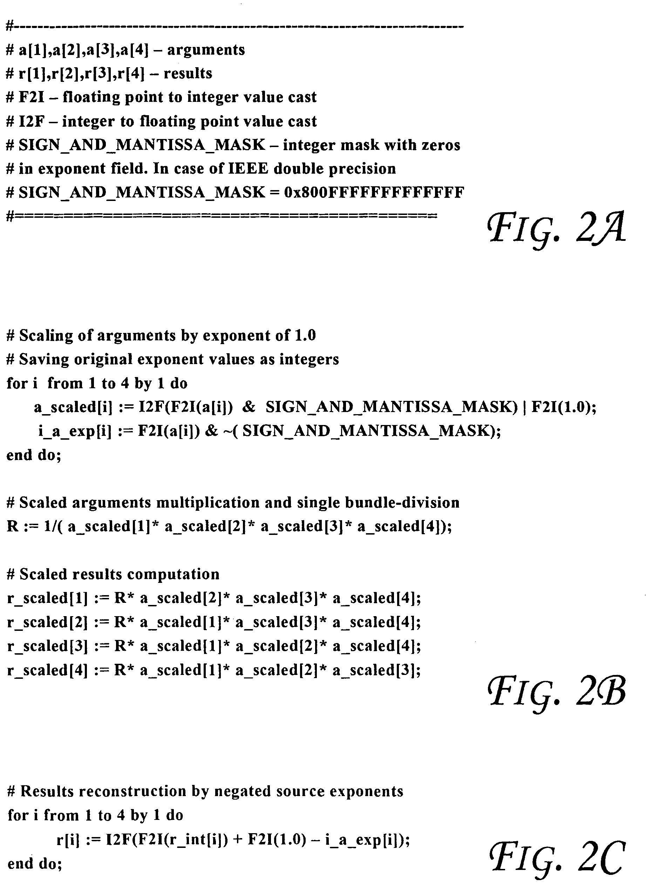

**Figs. 2A to 2C** illustrate pseudo codes to perform fast branch-free vector division computation, according to some embodiments. More specifically, Fig. 2A illustrates arguments, results, casts, and other definitions. Fig. 2B illustrates pseudo code for scaling arguments and saving original exponent values, along with multiplication of scaled arguments, e.g., as discussed with reference to Fig. 1. Fig. 2C illustrates pseudo code for result reconstruction. In some embodiments, for full division r[i] may be multiplied by numerators.

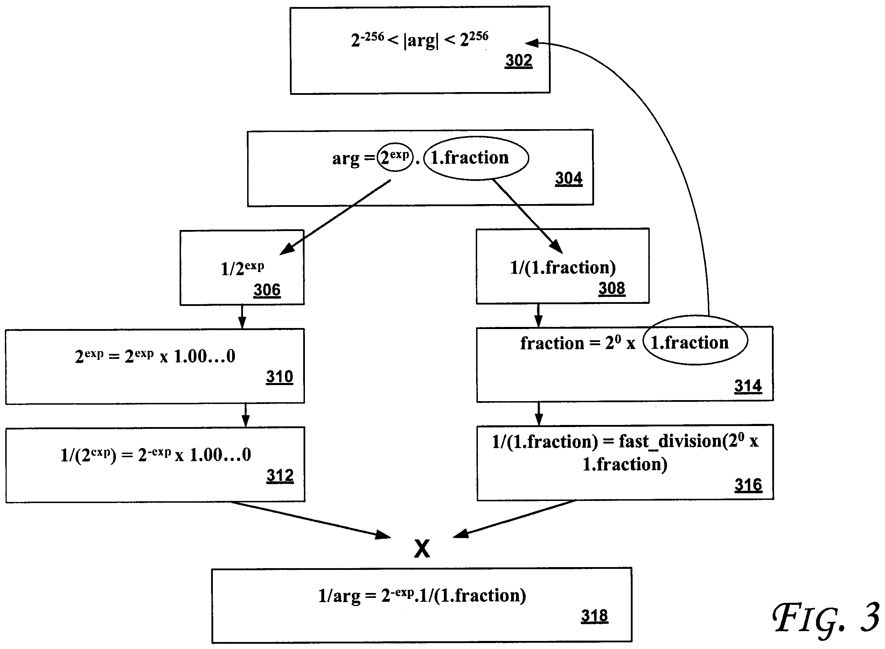

**Fig. 3** illustrates a block diagram of a fast vector division, according to an embodiment. As shown, exponent and fraction portions of a floating point number 302 are separately handled 304. While in the shown example, the number (labeled as "arg") is indicated within a shown range, other ranges may be used depending on the implementation, processor, datapath width, etc. Moreover, to obtain the inversion of an argument, inversion of exponent 306 and inversion of mantissa 308 may be determined separately, and then the final result is determined based on their product. In one embodiment, the inversion of exponent may be based on a sign replacement (310 and 312), such as discussed with reference to Figs. 1-2C. This may be done via integer operations and without any accuracy loss in some embodiments. To inverse the fraction (314 and 316), it may be represented as a floating point number with zero exponent. Lastly, the final result is determined 318 based on the multiplication of the inverted fraction and exponent (which is considered to be a precise result since at least one of multipliers has a zero fraction).

**Fig. 4** illustrates a block diagram of an embodiment of a computing system 400. In various embodiments, one or more of the components of the system 400 may be provided in various electronic devices capable of performing one or more of the operations discussed herein with reference to some embodiments of the invention. For example, one or more of the components of the system 400 may be used to perform the operations discussed with reference to Figs. 1-3, e.g., by generating values corresponding to division/inversion by enhanced performance through use of SIMD, etc. in accordance with the operations discussed herein. Also, various storage devices discussed herein (e.g., with reference to Figs. 4 and/or 5) may be used to store data, operation results, etc. In one embodiment, data associated with operations of method 300 of Fig. 3 may be stored in memory device(s) (such as memory 412 or one or more caches (e.g., L1 caches in an embodiment) present in processors 402 of Fig. 4 or 502/604 of Fig. 5). These processors may then apply the operations discussed herein for fast division/inversion (such as one or more of the operations of Figs. 1-3). Accordingly, in some embodiments, processors 402 of Fig. 4 or 502/604 of Fig. 5 may be vector processors that are capable of supporting SIMD operations.

Moreover, the computing system 400 may include one or more central processing unit(s) (CPUs) 402 or processors that communicate via an interconnection network (or bus) 404. The processors 402 may include a general purpose processor, a network processor (that processes data communicated over a computer network 403), or other types of a processor (including a reduced instruction set computer (RISC) processor or a complex instruction set computer (CISC)). Moreover, the processors 402 may have a single or multiple core design. The processors 402 with a multiple core design may integrate different types of processor cores on the same integrated circuit (IC) die. Also, the processors 402 with a multiple core design may be implemented as symmetrical or asymmetrical multiprocessors. Additionally, the processors 402 may utilize an SIMD architecture. Moreover, the operations discussed with reference to Figs. 1-3 may be performed by one or more components of the system 400.

A chipset 406 may also communicate with the interconnection network 404. The chipset 406 may include a memory control hub (MCH) 408. The MCH 408 may include a memory controller 410 that communicates with a memory 412. The memory 412 may store data, including sequences of instructions that are executed by the CPU 402, or any other device included in the computing system 400. In one embodiment of the invention, the memory 412 may include one or more volatile storage (or memory) devices such as random access memory (RAM), dynamic RAM (DRAM), synchronous DRAM (SDRAM), static RAM (SRAM), or other types of storage devices. Nonvolatile memory may also be utilized such as a hard disk. Additional devices may communicate via the interconnection network 404, such as multiple CPUs and/or multiple system memories.

The MCH 408 may also include a graphics interface 414 that communicates with a display 416. The display 416 may be used to show a user results of operations associated with the fast division/inversion discussed herein. In one embodiment of the invention, the graphics interface 414 may communicate with the display 416 via an accelerated graphics port (AGP). In an embodiment of the invention, the display 416 may be a flat panel display that communicates with the graphics interface 414 through, for example, a signal converter that translates a digital representation of an image stored in a storage device such as video memory or system memory into display signals that are interpreted and displayed by the display 416. The display signals produced by the interface 414 may pass through various control devices before being interpreted by and subsequently displayed on the display 416.

A hub interface 418 may allow the MCH 408 and an input/output control hub (ICH) 420 to communicate. The ICH 420 may provide an interface to I/O devices that communicate with the computing system 400. The ICH 420 may communicate with a bus 422 through a peripheral bridge (or controller) 424, such as a peripheral component interconnect (PCI) bridge, a universal serial bus (USB) controller, or other types of peripheral bridges or controllers. The bridge 424 may provide a data path between the CPU 402 and peripheral devices. Other types of topologies may be utilized. Also, multiple buses may communicate with the ICH 420, e.g., through multiple bridges or controllers. Moreover, other peripherals in communication with the ICH 420 may include, in various embodiments of the invention, integrated drive electronics (IDE) or small computer system interface (SCSI) hard drive(s), USB port(s), a keyboard, a mouse, parallel port(s), serial port(s), floppy disk drive(s), digital output support (e.g., digital video interface (DVI)), or other devices.

The bus 422 may communicate with an audio device 426, one or more disk drive(s) 428, and a network interface device 430, which may be in communication with the computer network 403. In an embodiment, the device 430 may be a NIC capable of wireless communication. Other devices may communicate via the bus 422. Also, various components (such as the network interface device 430) may communicate with the MCH 408 in some embodiments of the invention. In addition, the processor 402 and the MCH 408 may be combined to form a single chip. Furthermore, the graphics interface 414 may be included within the MCH 408 in other embodiments of the invention.

Furthermore, the computing system 400 may include volatile and/or nonvolatile memory (or storage). For example, nonvolatile memory may include one or more of the following: read-only memory (ROM), programmable ROM (PROM), erasable PROM (EPROM), electrically EPROM (EEPROM), a disk drive (e.g., 428), a floppy disk, a compact disk ROM (CD-ROM), a digital versatile disk (DVD), flash memory, a magneto-optical disk, or other types of nonvolatile machine-readable media that are capable of storing electronic data (e.g., including instructions). In an embodiment, components of the system 400 may be arranged in a point-to-point (PtP) configuration such as discussed with reference to Fig. 5. For example, processors, memory, and/or input/output devices may be interconnected by a number of point-to-point interfaces.

More specifically, **Fig. 5** illustrates a computing system 500 that is arranged in a point-to-point (PtP) configuration, according to an embodiment of the invention. In particular, Fig. 5 shows a system where processors, memory, and input/output devices are interconnected by a number of point-to-point interfaces. The operations discussed with reference to Figs. 1-4 may be performed by one or more components of the system 500.

As illustrated in Fig. 5, the system 500 may include several processors, of which only two, processors 502 and 504 are shown for clarity. The processors 502 and 504 may each include a local memory controller hub (MCH) 506 and 508 to couple with memories 510 and 512. The memories 510 and/or 512 may store various data such as those discussed with reference to the memory 412 of Fig. 4.

The processors 502 and 504 may be any suitable processor such as those discussed with reference to the processors 402 of Fig. 4. The processors 502 and 504 may exchange data via a point-to-point (PtP) interface 514 using PtP interface circuits 516 and 518, respectively. The processors 502 and 504 may each exchange data with a chipset 520 via individual PtP interfaces 522 and 524 using point to point interface circuits 526, 528, 530, and 532. The chipset 520 may also exchange data with a high-performance graphics circuit 534 via a high-performance graphics interface 536, using a PtP interface circuit 537.

At least one embodiment of the invention may be provided by utilizing the processors 502 and 504. For example, the processors 502 and/or 504 may perform one or more of the operations of Figs. 1-4. Other embodiments of the invention, however, may exist in other circuits, logic units, or devices within the system 500 of Fig. 5. Furthermore, other embodiments of the invention may be distributed throughout several circuits, logic units, or devices illustrated in Fig. 5.

The chipset 520 may be coupled to a bus 540 using a PtP interface circuit 541. The bus 540 may have one or more devices coupled to it, such as a bus bridge 542 and I/O devices 543. Via a bus 544, the bus bridge 543 may be coupled to other devices such as a keyboard/mouse 545, the network interface device 530 discussed with reference to Fig. 5 (such as modems, network interface cards (NICs), or the like that may be coupled to the computer network 403), audio I/O device, and/or a data storage device 548. The data storage device 548 may store code 549 that may be executed by the processors 502 and/or 504.

In various embodiments of the invention, the operations discussed herein, e.g., with reference to Figs. 1-5, may be implemented as hardware (e.g., logic circuitry), software (including, for example, micro-code that controls the operations of a processor such as the processors discussed with reference to Figs. 4-5), firmware, or combinations thereof, which may be provided as a computer program product, e.g., including a tangible machine-readable or computer-readable medium having stored thereon instructions (or software procedures) used to program a computer (e.g., a processor or other logic of a computing device) to perform an operation discussed herein. The machine-readable medium may include a storage device such as those discussed herein.

Additionally, such tangible computer-readable media may be downloaded as a computer program product, wherein the program may be transferred from a remote computer (e.g., a server) to a requesting computer (e.g., a client) by way of data signals embodied in tangible propagation medium via a communication link (e.g., a bus, a modem, or a network connection).

Thus, although embodiments of the invention have been described in language specific to structural features and/or methodological acts, it is to be understood that claimed subject matter may not be limited to the specific features or acts described. Rather, the specific features and acts are disclosed as sample forms of implementing the claimed subject matter.

**Claims**

1. An apparatus comprising:

   a memory to store a plurality of data values corresponding to an SIMD (Single Instruction, Multiple Data) instruction; and
   a processor having a plurality of SIMD lanes, wherein each of the plurality of the SIMD lanes is to process one of the plurality of data stored in the memory in accordance with the SIMD instruction, **characterized in that** the processor is configured to invert a plurality of floating point values using at least one SIMD instruction by:

   receiving a plurality of data values $x_i$, with $1 \leq i \leq n$, each representing a floating point value having a fraction portion $f_i$ and an exponent portion $n_i$;
   scaling (314) the plurality of fraction portions $f_i$ of the plurality of data values to generate a plurality of scaled arguments $z_i$, such that $z_i \in [1,2)$;
   multiplying the plurality of scaled arguments $z_i$ to generate a first value M;
   inverting the first value M to generate a second value R;
   calculating an inverted version of each scaled argument $z_i$ by multiplying the second value R with all scaled arguments $z_j$, where $1 \leq j \leq n$ and $j \neq i$;
   negating (312) for each $x_i$ to be inverted the exponent portion $n_i$ by changing a sign of the exponent portion $n_i$ of the respective argument $x_i$ to generate a negated exponent $m_i$; and
   multiplying (318) $2^{m_i}$ with the inverted version of the scaled argument $z_i$ to generate an inverse version of $x_i$.

2. The apparatus of claim 1, wherein the processor is to determine (304) the exponent portion $n_i$ and the fraction portion $f_i$ of the data value $x_i$.

3. The apparatus of claim 1, wherein the processor is to scale (314) the plurality of fraction portions $f_i$ by 1.0 to generate the plurality of scaled arguments $z_i$.

4. The apparatus of claim 1, wherein the processor is to convert a floating point version of the plurality of data values to respective integer values.

5. The apparatus of claim 1, wherein the memory comprises a cache.

6. The apparatus of claim 1, wherein the processor comprises one or more processor cores.

7. The apparatus of claim 1, wherein the processor is to cause storage of generated values in the memory.

8. The apparatus of claim 1, further comprising a display device to display the inverse version of the first value.

9. A computer-readable medium comprising one or more instructions that when executed on a processor configure the processor to perform one or more operations for inverting a plurality of floating point values using at least one Single Instruction Multiple Data, called SIMD, instruction to:

   receive (102) a plurality of arguments $x_i$, with $1 \leq i \leq n$, each representing a floating point value having a fraction portion $f_i$ and an exponent portion $n_i$;
   scale (104) the plurality of fraction portions $f_i$ of the plurality of arguments $x_i$ to generate a plurality of corresponding scaled arguments $z_i$, such that $z_i \in [1,2)$;
   multiply (106) the plurality of scaled arguments $z_i$ to generate a first value M;
   invert (108) the first value M to generate a second value R;

calculate an inverted version of each scaled argument $z_i$ by multiplying the second value R with all scaled arguments $z_j$, where $1 \leq j \leq n$ and $j \neq i$;

negate for each $x_i$ to be inverted the exponent portion $n_i$ by changing a sign of the exponent portion $n_i$ of the respective argument $x_i$ to generate a negated exponent $m_i$; and

reconstruct (110) an inverted version of $x_i$ based on a multiplication of $2^{m_i}$ with the inverted version of the scaled argument $z_i$.

10. The computer-readable medium of claim 9, further comprising one or more instructions that when executed on a processor configure the processor to convert a floating point version of the plurality of arguments $x_i$ to an integer value.

11. The computer-readable medium of claim 9, further comprising one or more instructions that when executed on a processor configure the processor to scale the plurality of fraction portions $f_i$ by 1.0.

12. The computer-readable medium of claim 9, further comprising one or more instructions that when executed on a processor configure the processor to store generated values in a memory.

13. The computer-readable medium of claim 9, further comprising one or more instructions that when executed on a processor configure the processor to multiply a negated exponent portion $m_i$ and an inverted fraction portion of the plurality of arguments $x_i$.

14. A method for inverting a plurality of floating point values using at least one Single Instruction Multiple Data, called SIMD, instruction in a processor, the method comprising:

receiving a plurality of arguments $x_i$, with $1 \leq i \leq n$, each representing a floating point value having a fraction portion $f_i$ and an exponent portion $n_i$;

scaling the plurality of fraction portions $f_i$ of the plurality of arguments $x_i$ to generate a plurality of corresponding scaled arguments $z_i$, such that $z_i \in [1,2)$;

multiplying the plurality of scaled arguments $z_i$ to generate a first value M;

inverting the first value M to generate a second value R;

calculating an inverted version of each scaled argument $z_i$ by multiplying the second value R with all scaled arguments $z_j$, where $1 \leq j \leq n$ and $j \neq i$;

negating for each $x_i$ to be inverted the exponent portion $n_i$ by changing a sign of the exponent portion $n_i$ of the respective argument $x_i$ to generate a negated exponent $m_i$; and

reconstructing an inverted version of $x_i$ based on a multiplication of $2^{m_i}$ with the inverted version of the scaled argument $z_i$.

**Patentansprüche**

1. Vorrichtung, aufweisend:

einen Speicher zum Speichern einer Vielzahl von Datenwerten, die einer SIMD-Anweisung (Einzelanweisung, Mehrfachdaten) entsprechen; und

einen Prozessor mit einer Vielzahl von SIMD-Lanes, wobei jede der Vielzahl der SIMD-Lanes eine der in dem Speicher gespeicherten Vielzahl von Daten gemäß der SIMD-Anweisung verarbeiten soll, **dadurch gekennzeichnet, dass** der Prozessor dazu konfiguriert ist, eine Vielzahl von Gleitkommawerten unter Verwendung mindestens einer SIMD-Anweisung zu invertieren, durch:

Empfangen einer Vielzahl von Datenwerten $x_i$, mit $1 \leq i \leq n$, die jeweils einen Gleitkommawert mit einem Bruchteil $f_i$ und einem Exponententeil $n_i$ darstellen;

Skalieren (314) der Vielzahl von Bruchteilen $f_i$ der Vielzahl von Datenwerten, um eine Vielzahl von skalierten Argumenten $z_i$ zu erzeugen, so dass $z_i \in [1,2)$;

Multiplizieren der Vielzahl von skalierten Argumenten $z_i$, um einen ersten Wert M zu erzeugen;

Invertieren des ersten Wertes M, um einen zweiten Wert R zu erzeugen;

Berechnen einer invertierten Version jedes skalierten Arguments $z_i$ durch Multiplizieren des zweiten Wertes R mit allen skalierten Argumenten $z_j$, wobei $1 \leq j \leq n$ und $j \neq i$;

Negieren (312), für jedes zu invertierende $x_i$, des Exponententeils $n_i$ durch Wechseln eines Vorzeichens des Exponententeils $n_i$ des jeweiligen Arguments $x_i$, um einen negierten Exponenten $m_i$ zu erzeugen; und

Multiplizieren (318) von $2^{m_i}$ mit der invertierten Version des skalierten Arguments $z_i$, um eine inverse Version von $x_i$ zu erzeugen.

2. Vorrichtung nach Anspruch 1, wobei der Prozessor den Exponententeil $n_i$ und den Bruchteil $f_i$ des Datenwertes $x_i$ bestimmen (304) soll.

3. Vorrichtung nach Anspruch 1, wobei der Prozessor die Vielzahl von Bruchteilen $f_i$ mit 1,0 skaliert (314), um die Vielzahl von skalierten Argumenten $z_i$ zu erzeugen.

4. Vorrichtung nach Anspruch 1, wobei der Prozessor eine Gleitkomma-Version der Vielzahl von Datenwerten in jeweilige ganzzahlige Werte umwandelt.

5. Vorrichtung nach Anspruch 1, wobei der Speicher einen Cache aufweist.

6. Vorrichtung nach Anspruch 1, wobei der Prozessor einen oder mehrere Prozessorkerne aufweist.

7. Vorrichtung nach Anspruch 1, wobei der Prozessor die Speicherung von erzeugten Werten im Speicher bewirken soll.

8. Vorrichtung nach Anspruch 1, ferner aufweisend ein Anzeigegerät zur Anzeige der inversen Version des ersten Wertes.

9. Computerlesbares Medium, das eine oder mehrere Anweisungen aufweist, die, wenn sie auf einem Prozessor ausgeführt werden, den Prozessor dazu konfigurieren, eine oder mehrere Operationen zum Invertieren einer Vielzahl von Gleitkomma-Werten unter Verwendung von mindestens einer Einzel-Anweisungs-Mehrfach-Daten-Anweisung, SIMD-Anweisung, durchzuführen:

Empfangen (102) einer Vielzahl von Argumenten $x_i$, mit $1 \leq i \leq n$, die jeweils einen Gleitkommawert mit einem Bruchteil $f_i$ und einem Exponententeil $n_i$ darstellen;
Skalieren (104) der Vielzahl von Bruchteilen $f_i$ der Vielzahl von Argumenten $x_i$, um eine Vielzahl von entsprechenden skalierten Argumenten $z_i$ zu erzeugen, so dass $z_i \in [1,2)$;
Multiplizieren (106) der Vielzahl von skalierten Argumenten $z_i$, um einen ersten Wert M zu erzeugen;
Invertieren (108) des ersten Wertes M, um einen zweiten Wert R zu erzeugen;
Berechnen einer invertierten Version jedes skalierten Arguments $z_i$ durch Multiplizieren des zweiten Wertes R mit allen skalierten Argumenten $z_j$, wobei $1 \leq j \leq n$ und $j \neq i$;
Negieren, für jedes zu invertierende $x_i$, des Exponententeils $n_i$ durch Wechseln eines Vorzeichens des Exponententeils $n_i$ des jeweiligen Arguments $x_i$, um einen negierten Exponenten $m_i$ zu erzeugen; und
Rekonstruieren (110) einer invertierten Version von $x_i$ basierend auf einer Multiplikation von $2^{m_i}$ mit der invertierten Version des skalierten Arguments $z_i$.

10. Computerlesbares Medium nach Anspruch 9, das ferner eine oder mehrere Anweisungen aufweist, die, wenn sie auf einem Prozessor ausgeführt werden, den Prozessor dazu konfigurieren, eine Gleitkomma-Version der Vielzahl von Argumenten $x_i$ in einen ganzzahligen Wert umzuwandeln.

11. Computerlesbares Medium nach Anspruch 9, das ferner eine oder mehrere Anweisungen aufweist, die, wenn sie auf einem Prozessor ausgeführt werden, den Prozessor dazu konfigurieren, die Vielzahl von Fraktionsabschnitten $f_i$ mit 1,0 zu skalieren.

12. Computerlesbares Medium nach Anspruch 9, das ferner eine oder mehrere Anweisungen aufweist, die, wenn sie auf einem Prozessor ausgeführt werden, den Prozessor dazu konfigurieren, erzeugte Werte in einem Speicher zu speichern.

13. Computerlesbares Medium nach Anspruch 9, das ferner eine oder mehrere Anweisungen aufweist, die, wenn sie auf einem Prozessor ausgeführt werden, den Prozessor dazu konfigurieren, einen negierten Exponententeil $m_i$ und einen invertierten Bruchteil der Vielzahl von Argumenten $x_i$ zu multiplizieren.

14. Verfahren zum Invertieren einer Vielzahl von Gleitkomma-Werten unter Verwendung mindestens einer Einzel-Anweisungs-Mehrfach-Daten-Anweisung, SIMD-Anweisung, in einem Prozessor, wobei das Verfahren aufweist:

Empfangen einer Vielzahl von Argumenten $x_i$ mit $1 \leq i \leq n$, die jeweils einen Gleitkommawert mit einem Bruchteil $f_i$ und einem Exponententeil $n_i$ darstellen;

Skalieren der Vielzahl von Bruchteilen $f_i$ der Vielzahl von Argumenten $x_i$, um eine Vielzahl von entsprechenden skalierten Argumenten $z_i$ zu erzeugen, so dass $z_i \in [1,2)$;

Multiplizieren der Vielzahl von skalierten Argumenten $z_i$, um einen ersten Wert M zu erzeugen;

Invertieren des ersten Wertes M, um einen zweiten Wert R zu erzeugen;

Berechnen einer invertierten Version jedes skalierten Arguments $z_i$ durch Multiplizieren des zweiten Wertes R mit allen skalierten Argumenten $z_j$, wobei $1 \leq j \leq n$ und $j \neq i$;

Negieren, für jedes zu invertierende $x_i$, des Exponententeils $n_i$ durch Wechseln eines Vorzeichens des Exponententeils $n_i$ des jeweiligen Arguments $x_i$, um einen negierten Exponenten $m_i$ zu erzeugen; und

Rekonstruieren einer invertierten Version von $x_i$ basierend auf einer Multiplikation von $2^{m_i}$ mit der invertierten Version des skalierten Arguments $z_i$.

**Revendications**

1. Appareil comprenant :

   une mémoire pour stocker une pluralité de valeurs de données correspondant à une instruction SIMD (instruction unique données multiples) ; et

   un processeur ayant une pluralité de voies SIMD, dans lequel chaque voie SIMD de la pluralité de voies SIMD est destinée à traiter des données de la pluralité de données stockées dans la mémoire en fonction de l'instruction SIMD, **caractérisé en ce que** le processeur est configuré pour inverser une pluralité de valeurs de virgule flottante à l'aide d'au moins une instruction SIMD par :

   réception d'une pluralité de valeurs de données $x_i$, avec $1 \leq i \leq n$, chacune représentant une valeur de virgule flottante ayant une partie fraction $f_i$ et une partie exposant $n_i$ ;

   mise à l'échelle (314) de la pluralité de parties fraction $f_i$ de la pluralité de valeurs de données pour générer une pluralité d'arguments mis à l'échelle $z_i$ de telle sorte que $z_i \in [1, 2)$ ;

   multiplication de la pluralité d'arguments mis à l'échelle $z_i$ pour générer une première valeur M ;

   inversion de la première valeur M pour générer une seconde valeur R ;

   calcul d'une version inversée de chaque argument mis à l'échelle $z_i$ par multiplication de la seconde valeur R avec tous les arguments mis à l'échelle $z_j$, où $1 \leq j \leq n$ et $j \neq i$ ;

   inversion (312) pour chaque $x_i$ à inverser de la partie exposant $n_i$ par modification d'un signe de la partie exposant $n_i$ de l'argument respectif $x_i$ afin de générer un exposant inversé $m_i$ ; et

   multiplication (318) de $2^{m_i}$ avec la version inversée de l'argument mis à l'échelle $z_i$ afin de générer une version inverse de $x_i$.

2. Appareil selon la revendication 1, dans lequel le processeur est destiné à déterminer (304) la partie exposant $n_i$ et la partie fraction $f_i$ de la valeur de données $x_i$.

3. Appareil selon la revendication 1, dans lequel le processeur est destiné à mettre à l'échelle (314) la pluralité de parties fraction $f_i$ par 1,0 afin de générer la pluralité d'arguments mis à l'échelle $z_i$.

4. Appareil selon la revendication 1, dans lequel le processeur est destiné à convertir une version de virgule flottante de la pluralité de valeurs de données en valeurs de nombre entier respectives.

5. Appareil selon la revendication 1, dans lequel la mémoire comprend une mémoire cache.

6. Appareil selon la revendication 1, dans lequel le processeur comprend un ou plusieurs noyaux de processeur.

7. Appareil selon la revendication 1, dans lequel le processeur est destiné à provoquer le stockage de valeurs générées dans la mémoire.

8. Appareil selon la revendication 1, comprenant en outre un dispositif d'affichage destiné à afficher la version inverse de la première valeur.

9. Support lisible par ordinateur comprenant une ou plusieurs instructions qui, lorsqu'elles sont exécutées sur un processeur, configurent le processeur de sorte à ce qu'il effectue une ou plusieurs opérations pour inverser une pluralité de valeurs de virgule flottante à l'aide d'au moins une instruction unique données multiples, appelée instruction SIMD pour :

recevoir (102) une pluralité d'arguments $x_i$, avec $1 \leq i \leq n$, chacun représentant une valeur de virgule flottante ayant une partie fraction $f_i$ et une partie exposant $n_i$ ;

mettre à l'échelle (104) la pluralité de parties fraction $f_i$ de la pluralité d'arguments $x_i$ pour générer une pluralité d'arguments mis à l'échelle $z_i$ correspondants de telle sorte que $z_i \in [1, 2)$ ;

multiplier (106) la pluralité d'arguments mis à l'échelle $z_i$ pour générer une première valeur M ;

inverser (108) la première valeur M pour générer une seconde valeur R ;

calculer une version inversée de chaque argument mis à l'échelle $z_i$ par multiplication de la seconde valeur R avec tous les arguments mis à l'échelle $z_j$, où $1 \leq j \leq n$ et $j \neq i$ ;

inverser pour chaque $x_i$ à inverser la partie exposant $n_i$ par modification d'un signe de la partie exposant $n_i$ de l'argument respectif $x_i$ afin de générer un exposant inversé $m_i$ ; et

reconstruire (110) une version inversée de $x_i$ en se basant sur une multiplication de $2^{m_i}$ avec la version inversée de l'argument mis à l'échelle $z_i$.

**10.** Support lisible par ordinateur selon la revendication 9, comprenant en outre une ou plusieurs instructions qui, lorsqu'elles sont exécutées sur un processeur, configurent le processeur de sorte à convertir une version de virgule flottante de la pluralité d'arguments $x_i$ en valeur de nombre entier.

**11.** Support lisible par ordinateur selon la revendication 9, comprenant en outre une ou plusieurs instructions qui, lorsqu'elles sont exécutées sur un processeur, configurent le processeur de sorte à ce qu'il mette à l'échelle la pluralité de parties fraction $f_i$ par 1,0.

**12.** Support lisible par ordinateur selon la revendication 9, comprenant en outre une ou plusieurs instructions qui, lorsqu'elles sont exécutées sur un processeur, configurent le processeur de sorte à stocker des valeurs générées dans une mémoire.

**13.** Support lisible par ordinateur selon la revendication 9, comprenant en outre une ou plusieurs instructions qui, lorsqu'elles sont exécutées sur un processeur, configurent le processeur de sorte à multiplier une partie exposant inversé $m_i$ et une partie fraction inversée de la pluralité d'arguments $x_i$.

**14.** Procédé pour inverser une pluralité de valeurs de virgule flottante à l'aide d'au moins une instruction unique données multiples, appelée instruction SIMD, dans un processeur, le procédé consistant à :

recevoir une pluralité d'arguments $x_i$, avec $1 \leq i \leq n$, chacun représentant une valeur de virgule flottante ayant une partie fraction $f_i$ et une partie exposant $n_i$ ;

mettre à l'échelle la pluralité de parties fraction $f_i$ de la pluralité d'arguments $x_i$ pour générer une pluralité d'arguments mis à l'échelle $z_i$ correspondants de telle sorte que $z_i \in [1, 2)$ ;

multiplier la pluralité d'arguments mis à l'échelle $z_i$ pour générer une première valeur M ;

inverser la première valeur M pour générer une seconde valeur R ;

calculer une version inversée de chaque argument mis à l'échelle $z_i$ par multiplication de la seconde valeur R avec tous les arguments mis à l'échelle $z_j$, où $1 \leq j \leq n$ et $j \neq i$ ;

inverser pour chaque $x_i$ à inverser la partie exposant $n_i$ par modification d'un signe de la partie exposant $n_i$ de l'argument respectif $x_i$ afin de générer un exposant inversé $m_i$ ; et

reconstruire une version inversée de $x_i$ en se basant sur une multiplication de $2^{m_i}$ avec la version inversée de l'argument mis à l'échelle $z_i$.

100

RECEIVE ARGUMENTS
102

SCALE RECEIVED ARGUMENTS
104

MULTIPLY SCALED
ARGUMENTS
106

INVERSE MULTIPLICATION
108

RECONSTRUCT RESULT
110

FIG. 1

```
#----------------------------------------------------------------
# a[1],a[2],a[3],a[4] – arguments
# r[1],r[2],r[3],r[4] – results
# F2I – floating point to integer value cast
# I2F – integer to floating point value cast
# SIGN_AND_MANTISSA_MASK – integer mask with zeros
# in exponent field. In case of IEEE double precision
# SIGN_AND_MANTISSA_MASK = 0x800FFFFFFFFFFFFF
#================================================
```

*FIG. 2A*

```
# Scaling of arguments by exponent of 1.0
# Saving original exponent values as integers
for i  from 1 to 4 by 1 do
     a_scaled[i] := I2F(F2I(a[i])  &  SIGN_AND_MANTISSA_MASK) | F2I(1.0);
     i_a_exp[i] := F2I(a[i]) & ~( SIGN_AND_MANTISSA_MASK);
end do;


# Scaled arguments multiplication and single bundle-division
R := 1/( a_scaled[1]* a_scaled[2]* a_scaled[3]* a_scaled[4]);


# Scaled results computation
r_scaled[1] := R* a_scaled[2]* a_scaled[3]* a_scaled[4];
r_scaled[2] := R* a_scaled[1]* a_scaled[3]* a_scaled[4];
r_scaled[3] := R* a_scaled[1]* a_scaled[2]* a_scaled[4];
r_scaled[4] := R* a_scaled[1]* a_scaled[2]* a_scaled[3];
```

*FIG. 2B*

```
# Results reconstruction by negated source exponents
for i from 1 to 4 by 1 do
       r[i] := I2F(F2I(r_int[i]) + F2I(1.0) – i_a_exp[i]);
end do;
```

*FIG. 2C*

$$2^{-256} < |arg| < 2^{256}$$

**302**

$$arg = 2^{exp} \cdot 1.fraction$$

**304**

$$1/(1.fraction)$$

**308**

$$fraction = 2^0 \times 1.fraction$$

**314**

$$1/(1.fraction) = fast\_division(2^0 \times 1.fraction)$$

**316**

$$1/2^{exp}$$

**306**

$$2^{exp} = 2^{exp} \times 1.00...0$$

**310**

$$1/(2^{exp}) = 2^{-exp} \times 1.00...0$$

**312**

$$X$$

$$1/arg = 2^{-exp}.1/(1.fraction)$$

**318**

*FIG. 3*

**400**

PROCESSOR
402-1

• • • •

PROCESSOR
402-n

404

MCH
408

MEMORY CONTROLLER
410

GRAPHICS INTERFACE
414

MEMORY
412

DISPLAY
416

418

ICH
420

PERIPHERAL BRIDGE
424

CHIPSET 406

422

AUDIO DEVICE
426

DISK DRIVE
428

NETWORK INTERFACE DEVICE
430

NETWORK
403

*FIG. 4*

**500**

PROCESSOR **502**

PROCESSOR **504**

506

508

MEMORY **510**

MCH

MCH

MEMORY **512**

526

P-P

P-P

P-P

P-P

522

516

514

518

528

524

530

P-P

CHIPSET **520**

P-P

532

537

GRAPHICS **534**

I/F

I/F

536

541

540

BUS BRIDGE **542**

I/O DEVICES **543**

AUDIO DEVICES **547**

544

KEYBOARD/ MOUSE **545**

NETWORK INTERFACE DEVICE/NIC **530**

DATA STORAGE **548**

CODE

549

NETWORK **403**

*FIG. 5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. PFISTER.** A fast division algorithm for SIMD-neurocomputers. *Neural Networks. IEEE World Congress on Computational Intelligence,* 1994, 2223-2226
- IEEE Std 754-2008 ED-Anonymous. *IEEE Standard for Floating Point Arithmetic,* 29 August 2008
- **K. G. LENZI et al.** Optimized Math Functions for a Fixed-Point DSP Architecture. *International Symposium on Computer Architecture and High Performance Computing,* 2007, 125-132

- *ADSP-BF533 Blackfin (R) Processor Hardware Reference - Revision 3.4,* 30 April 2009, 809-818
- **I. I. ZAVARZIN ; V. F. KURYAKIN ; V. V. LUNEV ; D.M. OBUVALIN ; V. G. RYZHIH.** Optimizatsiya Vychislenij Vektornyh Funktsyj. *VANT. ser. Matematicheskoe modelirovanie fizicheskih protsessov.,* 1997, vol. 4